Europäisches Patentamt

European Patent Office

Office européen des brevets

(19)

(11)   EP 0 721 601 B1

(12)   EUROPÄISCHE PATENTSCHRIFT

(45) Veröffentlichungstag und Bekanntmachung des Hinweises auf die Patenterteilung:
**11.04.2001  Patentblatt 2001/15**

(21) Anmeldenummer: **95926832.7**

(22) Anmeldetag: **01.08.1995**

(51) Int Cl.⁷: **G02B 27/00**

(86) Internationale Anmeldenummer:
**PCT/DE95/00996**

(87) Internationale Veröffentlichungsnummer:
**WO 96/04583 (15.02.1996 Gazette 1996/08)**

(54) **SCANSYSTEM**

SCANNING SYSTEM

SYSTEME DE BALAYAGE

(84) Benannte Vertragsstaaten:
**DE GB IT**

(30) Priorität: **01.08.1994  DE 4427230**

(43) Veröffentlichungstag der Anmeldung:
**17.07.1996  Patentblatt 1996/29**

(73) Patentinhaber: **Rodenstock Präzisionsoptik GmbH**
**80469 München (DE)**

(72) Erfinder:
• **BLEICHER, Jakob**
**D-81247 München (DE)**
• **ROTHE, Ernst**
**D-80637 München (DE)**
• **KNOTE, Manfred**
**D-79110 Freiburg (DE)**

• **RIEDEL, Wolfgang**
**D-79110 Freiburg (DE)**

(74) Vertreter: **Münich, Wilhelm, Dr.**
**Dr. Münich & Kollegen**
**Anwaltskanzlei**
**Wilhelm-Mayr-Str. 11**
**80689 München (DE)**

(56) Entgegenhaltungen:
**EP-A- 0 378 149          US-A- 4 950 889**
**US-A- 5 124 829**

• **PATENT ABSTRACTS OF JAPAN vol. 17 no. 189 (P-1521) ,13 April 1993 & JP,A,04 340519 (RICOH CO. LTD.) 26 November 1992,**
• **PATENT ABSTRACTS OF JAPAN vol. 12 no. 345 (P-759) ,16 September 1988 & JP,A,63 103206 (FUJI PHOTO FILM CO. LTD.) 7 May 1988,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf ein Scansystem mit einer Lichtquelle, einem Kollimatorobjektiv, einer Scaneinheit und einem Scan-Objektiv.

### Stand der Technik

In Scansystemen werden in der Regel sogenannte F/θ-Objektive eingesetzt, da bei "verzeichnungsfreien" Objektiven keine Linearität zwischen "Scanwinkel" und Bildhöhe gegeben ist.

Die meisten der bekannten Scan-Objektive sind de facto nur monochromatisch korrigiert. Der Grund hierfür ist zum einen, daß in der Vergangenheit Scansysteme gemäß dem Oberbegriff des Patentanspruchs 1 fast ausschließlich nur mit leistungsstarken monochromatischen Lichtquellen, wie Lasern oder Laserdioden ausgeführt wurden. Zum anderen ist es aufgrund des "extrem einseitigen" Aufbaus von Scan-Objektiven - nur exemplarisch sei die Blendenlage außerhalb des F/θ-Objektivs genannt -sehr schwierig, diese über einen großen Wellenlängenbereich zu korrigieren.

Ein F/θ-Objektiv, das beispielsweise über den größten Teil des sichtbaren Bereich des Spektrums, also z.B. zwischen 400 und 680 nm wenigstens annähernd hinsichtlich des Farbfehlers korrigiert ist, weist typischerweise die doppelte Anzahl von Linsen wie ein nur monochromatisch korrigiertes Objektiv auf.

Ein Scan-Objektiv, das über den gesamten Bereich des sichtbaren Spektrums oder für mehrere Laserwellenlängen, wie beispielsweise 633 nm, 830 nm und gleichzeitig 1064 nm gut korrigiert ist, ist - bei vertretbarem Aufwand - bislang nicht bekannt.

Aus der EP A 03781439 und der JP A 63103206 sind Scansysteme bekannt, die folgende Merkmale aufweisen, eine Lichtquelle, ein Kollimatorobjektiv, das auch als Achromat ausgebildet sein kann, eine Scaneinheit, ein Scanobjektiv, das drei oder vier Linsen aufweist, wobei der Farbfehler des gesamten Systems korrigiert ist. Diese Korrektur des gesamten Farbfehlers wird erreicht durch einerseits die Korrektur des Farbquerfehlers des Scan-Objektivs und andererseits, indem der Farblängsfehler des Kollimatorobjektivs dem des Scanobjektivs entgegengesetzt gewählt wird. Insbesondere ist das Kollimatorobjektiv überkorrigiert.

### Darstellung der Erfindung

Der Erfindung liegt die Aufgabe zugrunde, ein Scansystem anzugeben, das hinsichtlich des Farbfehlers über einen großen Wellenlängenbereich korrigiert ist und durch eine Weiterentwicklung des beschriebenen bekannten Standes der Technik eine weitere Reduzierung des baulichen Aufwandes sowie eine weitere Vereinfachung der Einstellbarkeit des Systemes zu erreichen.

Eine erfindungsgemäße Lösung dieser Aufgabe ist im Patentanspruch 1 angegeben. Weiterbildungen der Erfindung sind Gegenstand der Ansprüche 2 folgende.

Die Erfindung geht von dem Grundgedanken aus, daß entscheidend für die optische Leistung eines gattungsgemäßen Scansystems nicht die Korrektur der Einzelkomponenten, sondern die Korrektur des Gesamtsystems hinsichtlich der Farbfehler ist. Zur Umsetzung dieses Grundgedankens ist das Scan-Objektiv bei den zuvor beschriebenen Lösungen lediglich hinsichtlich des Farbquerfehlers korrigiert. Zur Korrektur des Farblängsfehlers und damit des gesamten Farbfehlers sind die Schnittweiten von Lichtstrahlen mit Wellenlängen in dem Wellenlängenbereich, über den das Scansystem hinsichtlich des Farbfehlers korrigiert sein soll, nach dem Kollimatorobjektiv so bemessen, daß das Scansystem auch hinsichtlich des Farblängsfehlers kompensiert ist.

Diese Bemessung der Schnittweiten erfolgt gemäß Anspruch 1, wobei Lichtbündel mehrerer Lichtquellen, die Licht in unterschiedlichen Wellenlängenbereichen emittieren, in das Kollimatorobjektiv eingespiegelt werden, und die Bilder dieser Lichtquellen nach dem Kollimatorobjektiv so positioniert sind, daß das Scan-Objektiv alle Abbildungen in eine Ebene fokussiert. Dies wird dadurch realisiert, daß die (angenähert) punktförmigen Lichtquellen einen unterschiedlichen Abstand von dem Kollimatorobjektiv haben.

Unabhängig davon, welche Ausführungsart realisiert ist, ist bevorzugt die von der Scaneinheit gesehen letzte Linse des Scan-Objektivs eine Linse mit negativer Brechkraft, die aus einem Glas mit einer Abbe'schen Zahl kleiner 55 besteht, und deren erste Fläche einen Krümmungsmittelpunkt hat, der auf der Seite der Scaneinheit liegt (Anspruch 2). Durch diese Ausgestaltung kann insbesondere der Farbquerfehler korrigiert werden.

Eine weitere bevorzugte Ausgestaltung des erfindungsgemäßen Scansystems ist im Anspruch 3 gekennzeichnet, gemäß dem die erste Fläche der von der Scaneinheit gesehen ersten Linse des Scan-Objektivs einen Krümmungsmittelpunkt hat, der auf der Seite der Scaneinheit liegt.

Durch diese Ausgestaltung wird insbesondere die Verzeichnung des erfindungsgemäßen Scan-Systems leicht korrigierbar.

Weiterhin ist es besonders für die Korrektur der Verzeichnung und des Farbfehlers von Vorteil, wenn der Abstand zwischen dem Scheitel der ersten Linse des Scan-Objektivs und der Scaneinheit größer als das 0,7-fache des Pupillendurchmessers des Objektivs ist (Anspruch 4).

Die Vignettierungsfreiheit wird weiter dadurch erreicht, daß gemäß Anspruch 5 die mechanische Begrenzung des Strahlengangs vor der Scaneinheit liegt.

Im Anspruch 6 ist eine Ausgestaltung des erfindungsgemäßen Scansystems angegeben, die eine besonders gute Korrektur des Farbquerfehlers ermöglicht, und bei der für das Scan-Objektiv gilt:

- erste Linse: positive Brechkraft, Abbe'sche Zahl > 50
- letzte Linse: negative Brechkraft, Abbe'sche Zahl < 55.

Bei dieser Ausgestaltung ist es ferner bevorzugt, wenn gemäß Anspruch 7 für das Verhältnis zwischen dem Krümmungsradius der zweiten Fläche der ersten Linse und dem Krümmungsradius der ersten Fläche der zweiten Linse gilt:

$$0{,}5 < r2/r3 < 2{,}5,$$

bevorzugt

$$0{,}75 < r2/r3 < 1{,}38.$$

Hierdurch können der Öffnungsfehler 3. und höherer Ordnung sowie der Asymmetriefehler besonders gut korrigiert werden.

Bei einer weiteren im Anspruch 9 angegebenen Ausgestaltung des erfindungsgemäßen Scansystems, durch die eine weitere Verbesserung der Korrektur des Farbquerfehlers erreicht wird, gilt für das Scan-Objektiv:

- vorletzte Linse: positive Brechkraft, Abbe'sche Zahl > 50
- letzte Linse: negative Brechkraft, Abbe'sche Zahl < 55.

Bei dieser Ausgestaltung ist es gemäß Anspruch 10 darüberhinaus bevorzugt, wenn für das Verhältnis zwischen dem Krümmungsradius der zweiten Fläche der vorletzten Linse und dem Krümmungsradius der ersten Fläche der letzten Linse

$$0{,}55 < r2vl/r1l < 1{,}55,$$

bevorzugt

$$0{,}69 < r2vl/r1l < 1{,}44$$

gilt.

Diese Ausgestaltung erleichtert die Korrektur des Öffnungsfehlers und des Asymmetriefehlers weiter.

Das Scan-Objektiv des erfindungsgemäßen Scansystems kann drei, vier oder mehr Linsen aufweisen, je nachdem, wie "gut" die Modulationsübertragungsfunktion (MTF) ausgebildet sein soll.

Das Kollimatorobjektiv ist als Achromat oder ausgebildet. Die Verwendung eines Achromaten hat den Vorteil, daß durch ihn die Korrektur des Farblängsfehlers erleichtert wird.

Die Erfindung wird nachstehend ohne Beschränkung des allgemeinen Erfindungsgedankens anhand von 16 Ausführungsbeispielen exemplarisch beschrieben.

In den Tabellen 1 bis 16 sind die in dem erfindungsgemäßen Scansystem eingesetzten Objektive angegeben, wobei die einzelnen Flächen in Richtung der Scan-lichtstrahlen durchnummeriert sind. Dabei ist mit BL die Blende des Scansystems bezeichnet.

In der Tabelle I ist exemplarisch ein Kollimatorobjektiv angegeben, das den Farblängsfehler des in Tabelle 1 dargestellten Scan-Objektivs derart kompensiert, daß die Modulationsübertragungsfunktion über den gesamten benutzten Wellenlängenbereich über den geamten Scanwinkel nahezu konstant ist.

**EP 0 721 601 B1**

In den folgenden Tabellen sind jeweils mit

ri     die Krümmungsradien der i-ten Fläche,
di     die Linsendicken bzw. Luftabstände zwischen der i-ten und der (i+1)-ten Fläche,
ni     die Brechungsindizes des Linsenmaterials, und
vi     die Abbe'schen Zahlen

bezeichnet.
Die Materialdaten ni und vi sind jeweils für die Wellenlänge 514 nm angegeben.

## Tabelle 1

|         | r       | d       | n      | v    |
|---------|---------|---------|--------|------|
| BL      | -       |         |        |      |
|         |         | 40,0    |        |      |
| 1       | -78,6   |         |        |      |
|         |         | 10,0    | 1,62   | 63   |
| 2       | -63,3   |         |        |      |
|         |         | 0,9     |        |      |
| 3       | -64,2   |         |        |      |
|         |         | 5,0     | 1,55   | 49   |
| 4       | -86,6   |         |        |      |
|         |         | 1,3     |        |      |
| 5       | -633,2  |         |        |      |
|         |         | 10,0    | 1,62   | 63   |
| 6       | -147,5  |         |        |      |
|         |         | 4,0     |        |      |
| 7       | -129,1  |         |        |      |
|         |         | 5,0     | 1,61   | 44   |
| 8       | -300,7  |         |        |      |
|         |         | 1370,4  |        |      |
| Bildebene BE |    |         |        |      |

## Tabelle I

|         | r       | d       | n      | v      |
|---------|---------|---------|--------|--------|
| BE      |         |         |        |        |
|         |         | 400,0   |        |        |
| 1       | 791,5   |         |        |        |
|         |         | 3,0     | 1,61   | 44,3   |
| 2       | 129,6   |         |        |        |
|         |         | 0,02    |        |        |
| 3       | 139,2   |         |        |        |
|         |         | 5,0     | 1,62   | 63,5   |
| 4BL     | -309.5  |         |        |        |

4

### Tabelle 2

| Blende | r | d | n | v |
|---|---|---|---|---|
|  |  | 30,0 |  |  |
| 1 | -63,26 |  |  |  |
|  |  | 6,0 | 1,62 | 63 |
| 2 | -59,32 |  |  |  |
|  |  | 3,0 |  |  |
| 3 | -42,69 |  |  |  |
|  |  | 3,9 | 1,55 | 49 |
| 4 | -45,79 |  |  |  |
|  |  | 1,0 |  |  |
| 5 | 2995,26 |  |  |  |
|  |  | 6,0 | 1,57 | 61 |
| 6 | -7000,22 |  |  |  |
|  |  | 3,0 |  |  |
| 7 | -585,12 |  |  |  |
|  |  | 7,8 | 1,62 | 44 |
| 8 | -233,20 |  |  |  |
|  |  | 1062,8 |  |  |
| BE |  |  |  |  |

### Tabelle 3

| Blende | r | d | n | v |
|---|---|---|---|---|
|  |  | 30,0 |  |  |
| 1 | -63,91 |  |  |  |
|  |  | 7,8 | 1,62 | 63 |
| 2 | -59,28 |  |  |  |
|  |  | 1,5 |  |  |
| 3 | -50,89 |  |  |  |
|  |  | 3,9 | 1,55 | 49 |
| 4 | -57,27 |  |  |  |
|  |  | 1,0 |  |  |
| 5 | -1011,10 |  |  |  |
|  |  | 7,8 | 1,62 | 63 |
| 6 | -115,87 |  |  |  |
|  |  | 3,1 |  |  |
| 7 | -115,70 |  |  |  |
|  |  | 3.9 | 1,62 | 44 |
| 8 | -492,35 |  |  |  |
|  |  | 1056,2 |  |  |
| BE |  |  |  |  |

Tabelle 4

|  | r | d | n | v |
|---|---|---|---|---|
| Blende |  |  |  |  |
|  |  | 30,0 |  |  |
| 1 | -59,21 |  |  |  |
|  |  | 4,0 | 1,62 | 63 |
| 2 | -54,98 |  |  |  |
|  |  | 5,0 |  |  |
| 3 | -37,72 |  |  |  |
|  |  | 3,9 | 1,55 | 49 |
| 4 | -40,68 |  |  |  |
|  |  | 1,0 |  |  |
| 5 | -1469,15 |  |  |  |
|  |  | 7,8 | 1,62 | 63 |
| 6 | -130,64 |  |  |  |
|  |  | 3,1 |  |  |
| 7 | -133,53 |  |  |  |
|  |  | 3.9 | 1,62 | 44 |
| 8 | -844,32 |  |  |  |
|  |  | 1038,3 |  |  |
| BE |  |  |  |  |

Tabelle 5

|  | r | d | n | v |
|---|---|---|---|---|
| Blende |  |  |  |  |
|  |  | 30,0 |  |  |
| 1 | -58,98 |  |  |  |
|  |  | 5,0 | 1,62 | 63 |
| 2 | -57,20 |  |  |  |
|  |  | 8,0 |  |  |
| 3 | -42,74 |  |  |  |
|  |  | 3,9 | 1,55 | 49 |
| 4 | -46,19 |  |  |  |
|  |  | 1,0 |  |  |
| 5 | -2639,88 |  |  |  |
|  |  | 7,8 | 1,62 | 63 |
| 6 | -169,73 |  |  |  |
|  |  | 7,0 |  |  |
| 7 | -236,74 |  |  |  |
|  |  | 3.9 | 1,62 | 44 |
| 8 | 1266,32 |  |  |  |
|  |  | 1024,2 |  |  |
| BE |  |  |  |  |

Tabelle 6

|  | r | d | n | v |
|---|---|---|---|---|
| Blende |  | 30,0 |  |  |
| 1 | -63,10 |  |  |  |
|  |  | 7,8 | 1,62 | 63 |
| 2 | -44,38 |  |  |  |
|  |  | 0,7 |  |  |
| 3 | -43,70 |  |  |  |
|  |  | 3,9 | 1,55 | 49 |
| 4 | -71,59 |  |  |  |
|  |  | 1,0 |  |  |
| 5 | -741,06 |  |  |  |
|  |  | 7,8 | 1,62 | 63 |
| 6 | -181,65 |  |  |  |
|  |  | 3,1 |  |  |
| 7 | -245,97 |  |  |  |
|  |  | 3.9 | 1,62 | 44 |
| 8 | -543,80 |  |  |  |
|  |  | 1063,1 |  |  |
| BE |  |  |  |  |

Tabelle 7

| | r | d | n | v |
|---|---|---|---|---|
| Blende | | 30,0 | | |
| 1 | -63,28 | | | |
| | | 7,8 | 1,62 | 63 |
| 2 | -44,90 | | | |
| | | 0,7 | | |
| 3 | -44,17 | | | |
| | | 3,9 | 1,55 | 49 |
| 4 | -71,61 | | | |
| | | 1,0 | | |
| 5 | -748,37 | | | |
| | | 7,8 | 1,62 | 63 |
| 6 | -182,69 | | | |
| | | 3,1 | | |
| 7 | -245,51 | | | |
| | | 3.9 | 1,68 | 37 |
| 8 | -528,01 | | | |
| | | 1062,8 | | |
| BE | | | | |

Tabelle 8

| | r | d | n | v |
|---|---|---|---|---|
| Blende | | 40,0 | | |
| 1 | -44,28 | | | |
| | | 7,8 | 1,62 | 63 |
| 2 | -51,78 | | | |
| | | 1,0 | | |
| 3 | -1496,72 | | | |
| | | 7.8 | 1,62 | 63 |
| 4 | -122,88 | | | |
| | | 3,1 | | |
| 5 | -454,34 | | | |
| | | 3,9 | 1,69 | 37 |
| 6 | 618,61 | | | |
| | | 1059,8 | | |
| BE | | | | |

Tabelle 9

|        | r        | d      | n    | v  |
|--------|----------|--------|------|----|
| Blende |          |        |      |    |
|        |          | 30,0   |      |    |
| 1      | -42,09   |        |      |    |
|        |          | 6,0    | 1,62 | 63 |
| 2      | -49,27   |        |      |    |
|        |          | 1,0    |      |    |
| 3      | -577,94  |        |      |    |
|        |          | 7.8    | 1,62 | 63 |
| 4      | -104,31  |        |      |    |
|        |          | 3,1    |      |    |
| 5      | -341,01  |        |      |    |
|        |          | 6,0    | 1,69 | 37 |
| 6      | 1108,68  |        |      |    |
|        |          | 1051,1 |      |    |
| BE     |          |        |      |    |

Tabelle 10

|     | r      | d    | n | v |
|-----|--------|------|---|---|
| BL  | -      |      |   |   |
|     |        | 30,0 |   |   |
| 1   | -63,26 |      |   |   |

| BL | r | d | n | v |
|---|---|---|---|---|
|  |  | 6,0 | 1,62 | 63 |
| 2 | -59,32 |  |  |  |
|  |  | 3,0 |  |  |
| 3 | -42.69 |  |  |  |
|  |  | 3,9 | 1,55 | 49 |
| 4 | -45,79 |  |  |  |
|  |  | 1,9 |  |  |
| 5 | 2995,25 |  |  |  |
|  |  | 6,0 | 1,56 | 61 |
| 6 | -7000,22 |  |  |  |
|  |  | 3,0 |  |  |
| 7 | -585,12 |  |  |  |
|  |  | 7,8 | 1,62 | 63 |
| 8 | -119,37 |  |  |  |
|  |  | 3,1 | 1,61 | 44 |
| 9 | -111,22 |  |  |  |
|  |  | 3,9 |  |  |
| 10 | -398,23 |  |  |  |
|  |  | 1045,5 |  |  |
| Bildebene BE |  |  |  |  |

Tabelle 11

| BL | r | d | n | v |
|---|---|---|---|---|
|  | - |  |  |  |
|  |  | 30,0 |  |  |
| 1 | -64,13 |  |  |  |
|  |  | 6,0 | 1,62 | 63 |
| 2 | -60,47 |  |  |  |
|  |  | 6,0 |  |  |
| 3 | -41,57 |  |  |  |
|  |  | 3,9 | 1,55 | 49 |
| 4 | -44,51 |  |  |  |
|  |  | 1,0 |  |  |
| 5 | 2995,42 |  |  |  |
|  |  | 6,0 | 1,56 | 61 |
| 6 | -7000,32 |  |  |  |
|  |  | 3,0 |  |  |
| 7 | -554,36 |  |  |  |
|  |  | 7,8 | 1,62 | 63 |
| 8 | -120,93 |  |  |  |
|  |  | 3,1 | 1,61 | 44 |
| 9 | -116,96 |  |  |  |
|  |  | 3,9 |  |  |
| 10 | -423,42 |  |  |  |
|  |  | 1045,0 |  |  |
| Bildebene BE |  |  |  |  |

Tabelle 12

|  | r | d | n | v |
|---|---|---|---|---|
| BL | – |  |  |  |
|  |  | 30,0 |  |  |
| 1 | -62,59 |  |  |  |
|  |  | 6,0 | 1,62 | 63 |
| 2 | -59,34 |  |  |  |
|  |  | 6,0 |  |  |
| 3 | -43,10 |  |  |  |
|  |  | 3,9 | 1,55 | 49 |
| 4 | -46,36 |  |  |  |
|  |  | 1,0 |  |  |
| 5 | -1560,54 |  |  |  |
|  |  | 6,0 | 1,56 | 61 |
| 6 | -1966,66 |  |  |  |
|  |  | 3,0 |  |  |
| 7 | -1730,18 |  |  |  |
|  |  | 7,8 | 1,62 | 63 |
| 8 | -131,09 |  |  |  |
|  |  | 3,1 |  |  |
| 9 | -128,58 |  | 1,61 | 44 |
|  |  | 3,9 |  |  |
| 10 | -590,44 |  |  |  |
|  |  | 1045,0 |  |  |
| Bildebene BE |  |  |  |  |

Tabelle 13

|  | r | d | n | v |
|---|---|---|---|---|
| BL | – |  |  |  |
|  |  | 30,0 |  |  |

11

|  | r | d | n | v |
|---|---|---|---|---|
| 1 | -64,03 | | | |
| | | 6,0 | 1,62 | 63 |
| 2 | -60,70 | | | |
| | | 6,0 | | |
| 3 | -41,37 | | | |
| | | 3,9 | 1,55 | 49 |
| 4 | -44.08 | | | |
| | | 1,0 | | |
| 5 | -1514,35 | | | |
| | | 6,0 | 1,56 | 61 |
| 6 | -2564,90 | | | |
| | | 3,0 | | |
| 7 | -1686,16 | | | |
| | | 7,8 | 1,62 | 63 |
| 8 | -128,13 | | | |
| | | 3,1 | | |
| 9 | -121,48 | | 1,61 | 44 |
| | | 3,9 | | |
| 10 | -508,97 | | | |
| | | 1046,7 | | |
| Bildebene BE | | | | |

Tabelle 14

|  | r | d | n | v |
|---|---|---|---|---|
| BL | - | | | |
| | | 30,0 | | |
| 1 | -143,89 | | | |
| | | 6,0 | 1,62 | 63 |
| 2 | -117,01 | | | |
| | | 10,0 | | |
| 3 | -50,31 | | | |
| | | 3,9 | 1,55 | 49 |
| 4 | -52,93 | | | |
| | | 1,0 | | |
| 5 | -122,60 | | | |
| | | 6,0 | 1,56 | 61 |
| 6 | -1239,61 | | | |
| | | 3,0 | | |
| 7 | -3464,52 | | | |
| | | 20,0 | 1,62 | 63 |
| 8 | -76,05 | | | |
| | | 3,1 | | |

| | r | d | n | v |
|---|---|---|---|---|
| 9 | -75,42 | | 1,61 | 44 |
| | | 3,9 | | |
| 10 | -147,57 | | | |
| | | 1093,2 | | |
| Bildebene BE | | | | |

Tabelle 15

| | r | d | n | v |
|---|---|---|---|---|
| BL | - | | | |
| | | 50,0 | | |
| 1 | -57,68 | | | |
| | | 6,0 | 1,62 | 63 |
| 2 | -56,92 | | | |
| | | 4,0 | | |
| 3 | -50,00 | | | |
| | | 3,9 | 1,55 | 49 |
| 4 | -54,52 | | | |
| | | 1,0 | | |
| 5 | 3868,37 | | | |
| | | 6,0 | 1,56 | 61 |
| 6 | -7809,38 | | | |
| | | 3,0 | | |
| 7 | -342,41 | | | |
| | | 13,0 | 1,62 | 63 |
| 8 | -95,71 | | | |
| | | 3,1 | | |
| 9 | -95,36 | | 1,61 | 44 |
| | | 3,9 | | |
| 10 | -245,71 | | | |
| | | 1066,7 | | |
| Bildebene BE | | | | |

Tabelle 16

| | r | d | n | v |
|---|---|---|---|---|
| BL | - | | | |

```
                    50,0
1       -62,15
                    7,75    1,62    63
2       -57,06
                    3,0
3       -55,15
                    3,9     1,55    49
4       -68,15
                    1,0
7       -366,85
                    12,0    1,62    63
8       -95,99
                    3,1
9       -100,95             1,61    44
                    3,9
10      -241,69
                    1072,4
Bildebene BE
```

**Patentansprüche**

1. Scansystem mit wenigstens einer Lichtquelle, einem Kollimatorobjektiv, einer Scaneinheit und einem Scan-Objektiv, wobei zur Korrektur des Farbfehlers über einen großen vorgegebenen Wellenlängenbereich das Scan-Objektiv lediglich hinsichtlich des Farbquerfehlers korrigiert ist, und die Schnittweiten von Lichtstrahlen mit Wellenlängen in dem vorgegebenen Wellenlängenbereich, über den das Scansystem hinsichtlich des Farbfehlers korrigiert ist, nach dem Kollimatorobjektiv so bemessen sind, daß das Scansystem auch hinsichtlich des Farblängsfehlers kompensiert ist, und das Scan-Objektiv wenigstens drei Linsen aufweist und das Kollimatorobjektiv als Achromat asusgebildet ist, dadurch **gekennzeichnet,** daß das Scansystem mehrere Lichtquellen aufweist, die Licht in unterschiedlichen Wellenlängenbereichen innerhalb des vorgegebenen großen Wellenlängen bereichs emittieren, wobei die Lichtbündel dieser Lichtquellen in das Kollimatorobjektiv eingespiegelt werden, und daß die Bilder dieser Lichtquellen nach dem Kollimatorobjektiv so positioniert sind, daß das Scan-Objektiv alle Abbildungen in eine Ebene fokussiert, das wiederum dadurch erreicht wird, daß die Lichtquellen einen bestimmten, unterschiedlichen, wellenlängenabhängigen Abstand vom Kollimatorobjektiv haben.

2. Scansystem nach Ansprüche 1,
   dadurch **gekennzeichnet,** daß die von der Scaneinheit gesehen letzte Linse des Scan-Objektivs eine Linse mit negativer Brechkraft ist, die aus einem Glas mit einer Abbe'schen zahl kleiner 55 besteht, und deren erste Fläche einen Krümmungsmittelpunkt hat, der auf der Seite der Scaneinheit liegt.

3. Scansystem nach einem der Ansprüche 1 bis 2,
   dadurch **gekennzeichnet,** daß die erste Fläche der von der Scaneinheit gesehen ersten Linse des Scan-Objektivs einen Krümmungsmittelpunkt hat, der auf der Seite der Scaneinheit liegt.

4. Scansystem nach einem der Ansprüche 1 bis 3,
   dadurch **gekennzeichnet,** daß der Abstand zwischen dem Scheitel der ersten Linse des Scan-Objektivs und der Scaneinheit größer als das 0,7-fache des Pupillendurchmessers des Objektivs ist.

5. Scansystem nach einem der Ansprüche 1 bis 4,
   dadurch **gekennzeichnet,** daß die mechanische Begrenzung des Strahlengangs vor der Scaneinheit liegt.

6. Scansystem nach einem der Ansprüche 1 bis 5,
   dadurch **gekennzeichnet,** daß für das Scan-Objektiv gilt:

   - erste Linse: positive Brechkraft, Abbe'sche Zahl > 50
   - letzte Linse: negative Brechkraft, Abbe'sche Zahl < 55.

**7.** Scansystem nach einem der Ansprüche 1 bis 6,
dadurch **gekennzeichnet,** daß für das Scan-Objektiv das Verhältnis zwischen dem Krümmungsradius der zweiten Fläche der ersten Linse und dem Krümmungsradius der ersten Fläche der zweiten Linse gilt:

$$0{,}5 < r2/r3 < 2{,}5$$

**8.** Scansystem nach Anspruch 7,
dadurch **gekennzeichnet,** daß gilt:

$$0{,}75 < r2/r3 < 1{,}38$$

**9.** Scansystem nach einem der Ansprüche 1 bis 7,
dadurch **gekennzeichnet,** daß für das Scan-Objektiv gilt:

- vorletzte Linse: positive Brechkraft, Abbe'sche Zahl > 50
- letzte Linse: negative Brechkraft, Abbe'sche Zahl < 55.

**10.** Scansystem nach Anspruch 9,
dadurch **gekennzeichnet,** daß für das Verhältnis zwischen dem Krümmungsradius der zweiten Fläche des Scan-Objektivs der vorletzten Linse und dem Krümmungsradius der ersten Fläche der letzten Linse gilt:

$$0{,}55 < r2vl/r1l < 1{,}55$$

**11.** Scansystem nach Anspruch 10,
dadurch **gekennzeichnet,** daß gilt:

$$0{,}69 < r2vl/r1l < 1{,}44$$

**12.** Scansystem nach einem der Ansprüche 1 bis 11,
dadurch **gekennzeichnet,** daß das Scan-Objektiv mehr als vier Linsen aufweist.

**Claims**

**1.** A scanning system with at least one light source, a collimating objective, a scanning unit and a scanning objective, wherein in order to correct the chromatic aberration over a large predetermined wavelength range, the scanning objective is merely corrected with respect to the transverse chromatic aberration and the vertex focal lengths of light rays with wavelengths in the predetermined wavelength range, over which the scanning system is corrected with respect to the chromatic aberration, are so dimensioned from the collimating objective that the scanning system is also compensated with respect to the axial chromatic aberration, and the scanning objective comprises at least three lenses and the collimating objective is designed as an achromat, characterized in that the scanning system comprises a plurality of light sources, which emit light in different wavelength ranges within the predetermined large wavelength range, wherein the light pencils of these light sources are imaged in the collimating objective, and in that the images of these light sources following the collimating objective are so positioned that the scanning objective focuses all images in one plane, which in turn is achieved in that the light sources have specific, different distances from the collimating objective, depending on wavelength.

**2.** A scanning system according to claim 1, characterized in that the last lens of the scanning objective as regarded from the scanning unit is a lens with negative refractive power, which consists of a glass with an Abbé number smaller than 55 and whose first surface has a centre of curvature which lies on the side of the scanning unit.

**3.** A scanning system according to claim 1 or 2, characterized in that the first surface of the first lens of the scanning objective as regarded from the scanning unit has a centre of curvature which lies on the side of the scanning unit.

4. A scanning system according to any of claims 1 to 3, characterized in that the distance between the vertex of the first lens of the scanning objective and the scanning unit is greater than 0.7 times the pupil diameter of the objective.

5. A scanning system according to any of claims 1 to 4, characterized in that the mechanical restriction of the beam path lies ahead of the scanning unit.

6. A scanning system according to any of claims 1 to 5, characterized in that the following applies to the scanning objective:

  - first lens: positive refractive power, Abbé number > 50
  - last lens: negative refractive power, Abbé number < 55.

7. A scanning system according to any of claims 1 to 6, characterized in that the ratio between the radius of curvature of the second surface of the first lens and radius of curvature of the first surface of the second lens in the case of the scanning objective complies with:

$$0.5 < r2/r3 < 2.5.$$

8. A scanning system according to claim 7, characterized in that:

$$0.75 < r2/r3 < 1.38.$$

9. A scanning system according to any of claims 1 to 7, characterized in that the following applies to the scanning objective:

  - penultimate lens: positive refractive power, Abbé number > 50
  - last lens: negative refractive power, Abbé number < 55.

10. A scanning system according to claim 9, characterized in that the ratio between the radius of curvature of the second surface of the scanning objective of the penultimate lens and radius of curvature of the first surface of the last lens complies with:

$$0.55 < r2v1/r11 < 1.55.$$

11. A scanning system according to claim 10, characterized in that:

$$0.69 < r2v1/r11 < 1.44.$$

12. A scanning system according to any of claims 1 to 11, characterized in that the scanning objective has more than four lenses.

**Revendications**

1. Système de balayage avec au moins une source de lumière, un objectif à collimateur, une unité de balayage et un objectif de balayage, dans lequel, pour corriger le défaut de chromatisme sur une grande plage de longueurs d'onde prédéterminée, l'objectif de balayage est corrigé uniquement par rapport au défaut de chromatisme transversal, et les distances focales de rayons lumineux ayant des longueurs d'onde dans la plage de longueurs d'onde prédéterminée, pour laquelle le système de balayage soit corrigé par rapport au défaut de chromatisme, sont dimensionnées selon l'objectif à collimateur de telle sorte que le système de balayage est également corrigé par rapport au défaut de chromatisme longitudinal, et l'objectif de balayage présente au moins trois lentilles et l'objectif à collimateur est réalisé comme un achromat,
caractérisé en ce que le système de balayage présente plusieurs sources de lumière qui émettent de la lumière dans différentes plages de longueurs d'onde à l'intérieur de la grande plage de longueurs d'onde prédéterminée, les faisceaux de lumière de ces sources de lumière étant reflétés dans l'objectif à collimateur, et en ce que les images de ces sources de lumière sont positionnées selon l'objectif à collimateur de telle sorte que l'objectif de balayage focalise toutes les représentations dans un plan, ce qui est réalisé d'autre part en ce que les sources de lumière ont une certaine distance variable, dépendante de la longueur d'onde, par rapport à l'objectif à collimateur.

2.  Système de balayage selon la revendication 1,
    caractérisé en ce que la dernière lentille de l'objectif de balayage, vue à partir de l'unité de balayage, est une lentille avec une force de réfraction négative qui se compose d'un verre ayant un coefficient d'Abbe inférieur à 55, et dont la première surface a un centre de courbure qui se situe sur le côté de l'unité de balayage.

3.  Système de balayage selon l'une des revendications 1 à 2, caractérisé en ce que la première surface de la première lentille de l'objectif de balayage, vue à partir de l'unité de balayage, a un centre de courbure qui se situe sur le côté de l'unité de balayage.

4.  Système de balayage selon l'une des revendications 1 à 3, caractérisé en ce que la distance entre le sommet de la première lentille de l'objectif de balayage et l'unité de balayage est supérieure à 0,7 fois le diamètre de pupille de l'objectif.

5.  Système de balayage selon l'une des revendications 1 à 4, caractérisé en ce que la limite mécanique de la marche des rayons se trouve devant l'unité de balayage.

6.  Système de balayage selon l'une des revendications 1 à 5, caractérisé en ce que les conditions suivantes s'appliquent pour l'objectif de balayage:

    -   première lentille : force de réfraction positive, coefficient d'Abbe > 50
    -   dernière lentille : force de réfraction négative, coefficient d'Abbe < 55.

7.  Système de balayage selon l'une des revendications 1 à 6, caractérisé en ce que pour l'objectif de balayage, le rapport entre le rayon de courbure de la deuxième surface de la première lentille et le rayon de courbure de la première surface de la deuxième lentille s'applique :

$$0,5 < r2/r3 < 2,5$$

8.  Système de balayage selon la revendication 7,
    caractérisé en ce que :

$$0,75 < r2/r3 < 1,38$$

    s'applique.

9.  Système de balayage selon l'une des revendications 1 à 7, caractérisé en ce que les conditions suivantes s'appliquent pour l'objectif de balayage:

    -   avant-dernière lentille : force de réfraction positive, coefficient d'Abbe > 50
    -   dernière lentille : force de réfraction négative, coefficient d'Abbe < 55.

10. Système de balayage selon la revendication 9,
    caractérisé en ce que pour le rapport entre le rayon de courbure de la deuxième surface de l'objectif de balayage de l'avant-dernière lentille et le rayon de courbure de la première surface de la dernière lentille :

$$0,55 < r2v1/r11 < 1,55$$

    s'applique.

**11.** Système de balayage selon la revendication 10,
caractérisé en ce que :

$$0,69 < r2v1/r11 < 1,44$$

s'applique.

**12.** Système de balayage selon l'une des revendications 1 à 11, caractérisé en ce que l'objectif de balayage présente plus de quatre lentilles.